# EUROPEAN PATENT APPLICATION

(11) **EP 0 917 348 A2**
(43) Date of publication of application: **19.05.1999**
(21) Application number: 98120844.0
(22) Date of filing: 03.11.1998
(51) Int. Cl.: H04N 1/40

(54) **Error diffusion with sub-pixel modulation for gray scale rendering of continous tone images**

(30) Priority: 17.11.1997 US 972208
(71) Applicant: Xerox Corporation, Rochester, New York 14644 (US)
(72) Inventor: Kletter, Doron, San Mateo, CA 94402 (US)
(74) Representative: Grünecker, Kinkeldey, Stockmair & Schwanhäusser Anwaltssozietät

(57) **Abstract**

In an error diffuser for rendering images defined by digital pixel samples, the improvement comprising of a detector for identifying highlight regions of said images and decision logic for outputting pixels of relatively short on-time duration for the printing of said highlight regions, on pixels of longer duration and off pixels for rendering other portions of said image.

## Description

This invention relates to binary processes for rendering continuous tone images and, more particularly, to an improved error diffusion process for a gray scale rendering of such images.

Error diffusion is a well known technique for rendering a continuous tone image to a image-like binary pattern of dots for the purpose of printing or displaying the image on a binary device. Since error diffusion require a pre-designed threshold array as in the traditional clustered-dot screening techniques, there is no particular structured cell associated with the resulting binary image, which means that it is better suited for rendering high frequency detail. Hence the error diffusion is often the preferred method of rendering for low to medium resolution binary rendering engines (e.g., those that render images at about 600 dots per inch or less).

Error diffusion, however, is generally acknowledged to suffer from the following limitations:
(i) The output image is often said to be "grainy"
(ii) The process tends to introduce certain artifacts (knows as "worms") at some gray levels
(iii) The process is generally fall short of providing adequate highlight (shadow) detail with sparse dots.
(iv) The process ordinarily assumes an ideal output device with no interaction between neighboring pixels.

As described in further detail hereinbelow, this invention provides enhancements and modifications to an error diffusion process described in Japanese Patent Application No. (Attorney Docket No. D/97498) which significantly improve the output quality. In particular, the proposed method offers a new and effective technique to greatly reduce the objectionable properties (i)-(iii) listed above by introducing sub-pixel or variable dot size modulation. The result is similar to the affect of applying Hewlett-Packard's (HP's) so-called REt (*Resolution Enhancement*) technology for enhancing text quality on low resolution output devices. However, unlike the large template matching that is required by HP's REt, the proposed technique is almost context-free and requires only a modest increase in computational complexity. Specifically, invention is built on two important concepts: a) *utilizing gray pixels* ("gray dots") by means of sub-pixel or variable dot size modulation; and b) *using a generic printer model* to match the error diffusion to the non-ideal output device. Xerographic and inkjet printers are examples of the binary rendering engines with which this invention may be employed to advantage

As is known, error diffusion typically involves a single pass over the input image, during which each pixel is processed sequentially. This processing thresholds the input pixel value and replaces it with one of two values, an "on" or an "off". As each pixel is replaced, an error may be introduced to the local gray level of the image. Therefore, this error is compensated by adjusting the values of the neighboring pixels to preserve the local gray level prior to thresholding. In order to avoid multiple passes over the image, the error is only propagated (or "diffused") among future pixels that have not been processed yet (e.g., to pixels located to the right and below the current pixel for a left-to-right scan order). Several methods for determining how to distribute the error among the neighboring pixels exist in the literature.

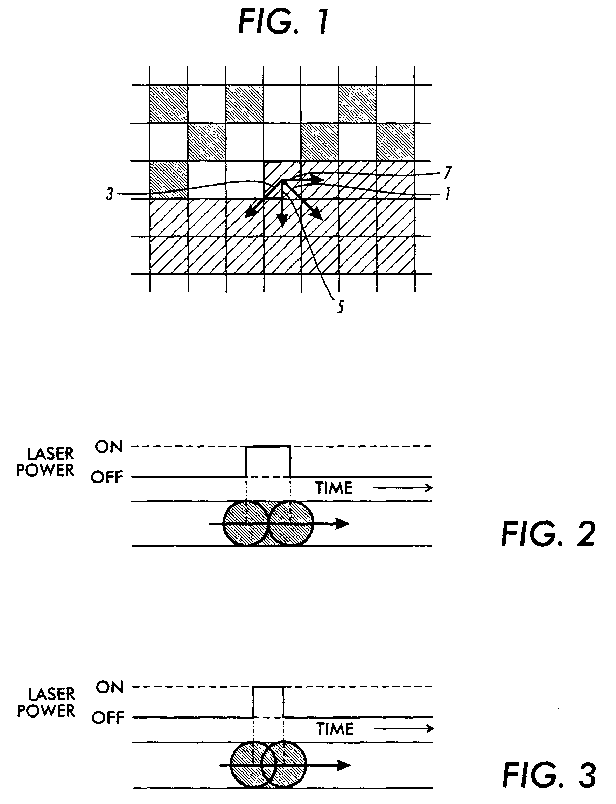

Fig. 1, which comes from work of Floyd & Steinberg, demonstrates the principles of error diffusion (the squares represent the input image pixels on a raster grid). The pixels in black and white were already processed, thresholded, and binarized to be either on or off, while the shaded pixels have not yet been processed. The center pixel, which is surrounded by a dark frame, is the current pixel to be processed next. The arrows leading from the current pixel indicate how the current thresholding error is to be distributed to the neighboring pixels. It is often referred to as the *error diffusion filter* in the literature. The numbers along the arrows describe the [possibly varying] non-normalized relative neighbor weight. For example, the number 7 associated with the pixel immediately to the right of the current pixel indicates that 7/16 of the error will be used to adjust this pixel, where 16 is the normalization factor equal to the total sum of the weights. As each of these neighbors is so adjusted, its associated gray value is changed (making it darker or lighter depending on the sign of the error), and the updated value is what in turn will be used for thresholding the neighboring pixels. Accordingly, it will be understood that a conventional error diffusion technique involves the following three basic steps: A *thresholding* step in which the current pixel is compared with a given threshold; followed by *an error compensation* step, where the error is adjusted by subtracting the binary output level; and finally, the error is *distributed* to the neighboring pixels. The process then advances by one pixel and repeats.

As described above, the error diffusion technique was originally designed for binary output devices, whose outcome can only be either on or off. The technique has since been extended to support multi-level output devices in a straightforward manner. The extension to multi-level error diffusion, however, requires multiple decisions per pixel. To illustrate this extension, consider the case where the output device can faithfully reproduce N distinct levels of gray. The conventional application of the multi-level error diffusion requires the use of N-1 thresholds for the error compensation step. Thus, for each pixel, the incoming value is compared to a sequence of up to N-1 pre-determined thresholds. As long as the incoming value is larger than the current threshold, the process advances to the next threshold and repeats. Once the incoming value is smaller or equal than the current threshold, the comparison cycle is halted and the corresponding gray level is outputted. The error between the incoming value and the output value is then calculated and distributed as before. For the assumed (ideal) device, the thresholds are generally uniformly distributed between 0 and 255 (assuming 8-bit representation).

In short, the use of multi-level (N-level) error diffusion typically increases the system complexity roughly linearly with N. Unfortunately, however, the resulting image quality usually does not increase in a similar fashion. The main reason for this is that a marking engine is typically designed to be used as a binary device, and is not capable of consistently reproducing single-pixel gray levels.

More particularly, it will be recalled that conventional binary and multi-level error diffusion methods propagate the rendering errors to pixels located to the right and below the current pixel (for a left-to-right scan order) according to a pre-determined rule. However, these methods make the assumption that the output device is ideal - that is, that each output pixel can be individually set to a unique shade of gray without any interaction with its neighboring pixels. However, this assumption is commonly at odds with practical realities. For example, toner particles in xerography based devices are charge-related, and therefore tend to be influenced significantly by the state of pixels in their proximity. Similarly, the dyes in ink-jet printers tend to bleed through the paper media and interact with the immediate pixels nearby (unless printing is slowed so much as to allow the paper to fully dry from one pixel to the next). Moreover, this interaction increases when the resolution elements in question are sub-pixels, that is, less than a full pixel apart. Thus, an optimized practical solution requires a coupling of a) a *knowledge of the printing process;* with b) an *understanding of the human vision system.* By taking the actual (which may be far from ideal) printer behavior into account, one can significantly increase the image quality, with only incremental increase in computational complexity.

While this invention is not limited to xerographic applications, xerography provides a useful example of how the knowledge of the printing process comes into play. As is known, standard xerography is a complicated process which is influenced by a large number of variables, such as temperature, humidity, toner characteristics, developer voltages, etc. Even if all of these variables could be precisely controlled, there is also is noise in the system, introducing variations in dot position (jitter), dot gain (density), dot shape, and dot-to-dot interaction. Consequently it would be very difficult, if not impossible, to precisely characterize the xerography process. And even if it could be accurately modeled, the model would tend to be extremely sensitive to small deviations in variable values. That, of course is contrary to the goal of providing a simple and effective rendering process that is robust and does not rely on such a complicated model. Clearly, however, the rendering process should leverage the common properties of the underlying rendering engine to its advantage.

With this in mind, first consider the operation of an ordinary xerographic laser marking device in some additional detail. Such a device charges a drum or transfer belt photoreceptor with uniform charge. A focused laser beam then scans over the photoreceptor in raster order, selectively erasing the charge in those locations where the laser is turned on. Finally, the latent image is developed, transferred to the paper media, and fused. A marking device of this type typically is driven by modulating the laser power between the (binary) levels of zero (laser off) and one (full power on). This usually is accomplished by means of a single digital interface signal, commonly referred to as the *video signal.* Several additional signals are used for maintaining synchronization and timing between the mechanical paper advance, the laser system retrace, and the video signal.

As a general rule, there no easy way to modulate the laser power without replacing all of the laser drive circuitry. And even then, it is not clear how many distinct gray levels can be consistently maintained since toner behavior is essentially non-linear - with too little charge, no toner will stick; but once sufficient charge is applied, the pixel density increases very quickly. Furthermore, since all toner is similarly charged, there is unavoidable interaction between neighboring toned regions of the image, and the interaction is proportional to the region sizes.

While the laser power may not be readily controllable, the on/off timing of the laser usually is. The laser has no notion of *fixed-width* pixels, so the only requirement is that the laser power be on for a sufficient amount of time for the photoreceptor to collect enough photons to discharge. Xerographic engine manufacturers use a performance metric, such as "600" or "400" dpi (dots-per-inch), which is based on the minimum on time required to guarantee the outcome. It is thus relatively easy to change (within limits) the laser timing by means of replacing the driving clock frequency.

Figs 2-5 illustrate the above-described behavior as the laser on-time duration is varied. Figure 2 shows a nominal pixel duration for particular marking engine (say 600 dpi). In Fig. 3 the duration is shorter, and if too short - no toner will adhere. However, if the pulse is already wide enough to attract some toner, as illustrated in Fig. 4, a small additional increase would cause more toner to adhere, and the perceived density would increase. Hence the density can be controlled more precisely than with pixels of predetermined size. However, this effect may be lost if two or more independently exposed regions or "dots" are too close to each other, where dot-to-dot interaction begins to play a role. As shown in Fig. 5, a toner bridge may be formed between the dots if they are too close together, in which case the perceived density will increase at an accelerated rate, so the proportionality between the density and the individual dot sizes no longer holds.

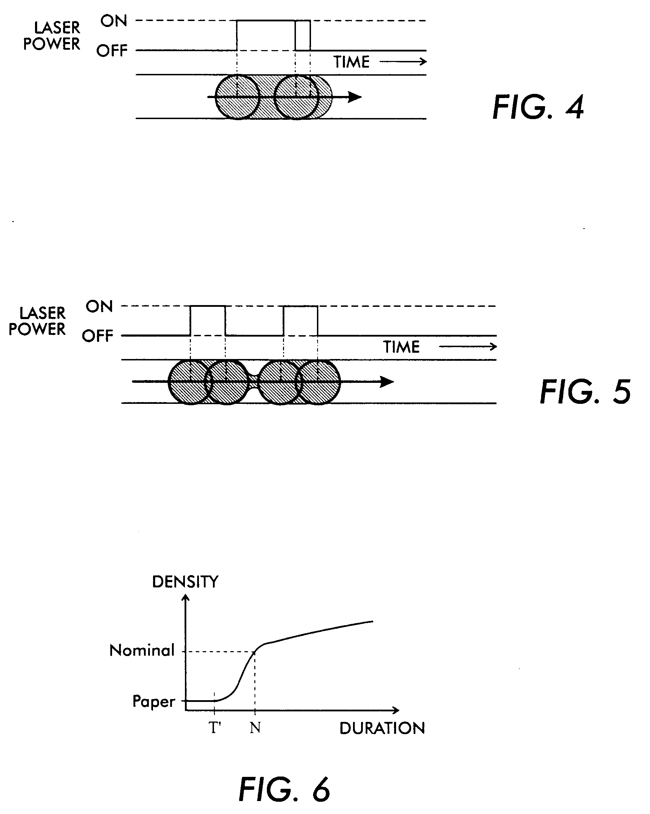

Fig. 6 illustrates an isolated dot response as a function of the laser duration Below the threshold **T** the pulse duration is too short for discharging the photoreceptor, and no toner will adhere (output density = paper density). For longer pulses, the density builds up quickly towards the 'knee' region under nominal conditions. Once the duration comes close to the single-pixel nominal working point, **N**, the density curve stabilizes. From this point on, the density increases proportionally to the additional increase in the pulse duration. The curve continues to grow monotonically until the dot-to-dot interaction begins to take effect as the printed image becomes darker and more dots are packed closer together.

Closer examination of Fig. 6 reveals two generally linear regions with different density slopes, one on each side of the nominal working point **N**, which are well suited for sub-pixel modulation. As will be seen, this invention leverages this generic behavior of xerography in and around the nominal working point to further enhance the output image quality. Even now, however, it will be evident that simply spacing the error calculation thresholds uniformly between zero and **N** (as assumed for conventional multi-level error-diffusion) would be suboptimal.

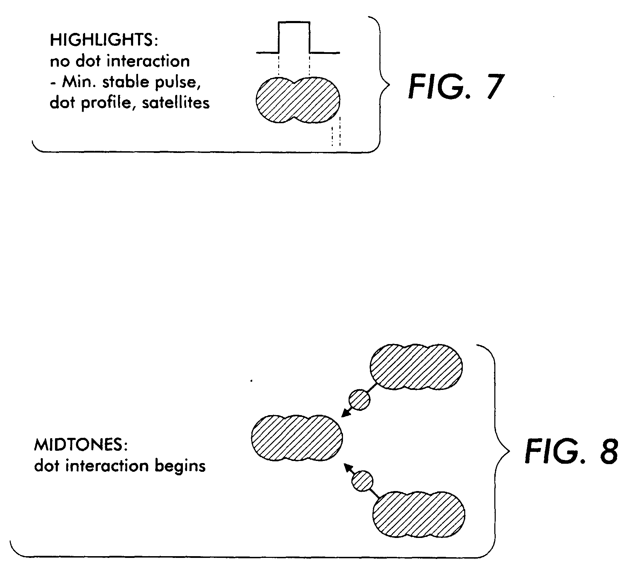

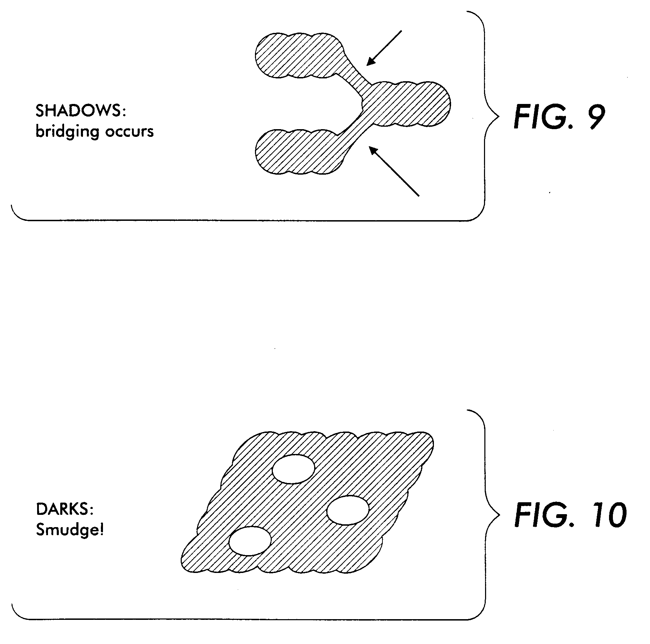

Figs. 7-10 illustrate the effects of multi-dot interaction on this generic model of the xerographic printing process. When printing highlights, such as shown in Fig. 7, there are relatively few dots per unit area, and these dots are well separated from each other. Thus, the behavior of these dots is generally consistent with the isolated-dot behavior shown in Fig. 6. As the image density increases, there are more dots per unit area, and the distance between dots shrinks. In the midtones, as shown in Fig. 8, satellites start forming as small clumps of toner along the closest distance lines. These clumps get larger as the density further increases, until permanent bridges are formed in the shadows of the image, as shown in Fig. 9. Finally, in even denser regions of the image, dots are printed everywhere except for a few "holes" between a few of the dots, as in Fig. 10. However, these holes tend to be filled or "clogged" because of the large amount of surrounding toner, so they are apt to disappear. Consequently, unless steps are taken to keep these the holes sufficiently large, it is difficult to achieve good control over the density in the darks.

This invention takes advantage of the above-described understanding of the isolated-dot and dot-to-dot behaviors of xerographic marking engines to provide an error diffusion process that significantly increases the output quality of such marking engines. By leveraging this common behavior into the design of the error diffusion, one can significantly enhance the output quality. These behaviors are generic, so the error diffusion process of this invention does not rely on a precise model of the marking engine, which contributes to the robustness of the process.
Fig. 1 is a simplified diagram of the error distribution phase of an error diffusion process;
Figs. 2-5 illustrate the effect of sub-pixel modulation on isolated dot xerography;
Figs 6 shows a typical isolated dot response of a xerographic marking engine;
Figs. 7-10 illustrate the effect of dot-to-dot interaction on the ordinary xerographic printing process; and

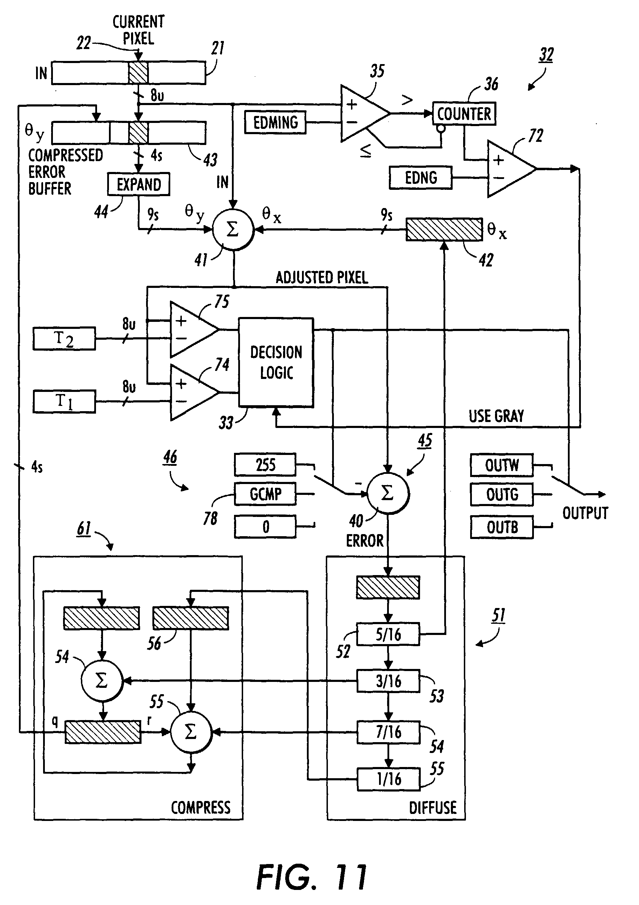

Fig. 11 is a block diagram of an embodiment of this invention.

While the invention is described in some detail hereinafter with reference to an illustrated embodiment, it is to be understood that there is no intent to limit it to that embodiment. On the contrary, the intent is to cover all modifications, alternatives and equivalents falling within the spirit and scope of the invention as defined by the appended claims.

Turning now to Fig. 11, gray scale pixel values, say, 8-bit unsigned integer values, from a suitable source, such as an input scanner (not shown), are written into a FIFO input buffer 21 in raster scan order, such as left-to right top-to-bottom order. These pixel values may be digital samples of a monotone (e.g., black and white) image or of a color separation of a polychromatic image. An address pointer 22 is incremented (modulo the length of the input buffer 21) to read out a current pixel value, say, x_{i,j} for error diffused rendering upon the completion of the rendering of the preceding pixel, x_{i, j-1.}

In accordance with the present invention, the current pixel value is routed to a counter circuit 32 and to a summer 33. This particular implementation of the invention extends the error diffusion process described in the above-identified Kletter et al patent application to three levels of gray (i.e., black, white and an intermediate gray level) based on the generic xerographic printer model that is described hereinabove. Given this printer model, it will be evident that this intermediate or "partial pixel" level of gray is best leveraged to improve the highlight response of a xerographic printer. This choice generally results in the greatest improvement in the output image quality because the response of the error diffusion process usually is at its worst in highlight regions of images due to the relatively high acuity of the human visual response to the sparse, relatively well separated dots or marks within these highlight regions. Thus, the counter circuit 32 and the associated threshold and decision logic 33 are designed to identify highlight regions of images and to control the rendering of those regions through the use of the partial pixel printing capability that is provided by the illustrated embodiment. It is to be understood, however, can be implemented to accommodate other generic printer models and/or to provide multiple intermediate levels of gray response.

As shown, a comparator 35 at the input of the counter circuit 32 compares the current pixel value with a predetermined threshold value EDMING which is selected to be sufficiently high (i. e., trending toward white at a pixel value of 255 in this particular embodiment) to separate pixels that potentially belong to highlight regions of the image from those that do not appear to have that potential. If the pixel value exceeds this threshold, the comparator 35 increments a counter 36. If, on the other hand, the current pixel value is less than or equal to the EDMING threshold, the comparator 35 clears the counter 36, thereby causing the rendering of the current pixel to default to the black/white mode described in the Kletter et al application, while disabling the sub-pixel modulation process for at least EDNG subsequent pixels as more fully explained hereinbelow.

Briefly, in the black/white default mode, the current pixel value is summed by a summer 41 with any horizontal and/or vertical error values that have been distributed to this pixel from previously processed pixels on the same scan line and/or on preceding scan lines (see Fig. 1). The accumulated horizontal error value, eₓ, for the current pixel is shifted out of a horizontal error buffer 42, while a compressed representation of the accumulated vertical error value is shifted out of a vertical error buffer 43 and then expanded by a decompressor or expander 44. As will be seen, the horizontal and vertical error values are represented by 9-bit signed integers, thereby representing the magnitude of those errors with same precision as the pixel values are represented while also identifying the sense of the errors.

The current pixel value, as adjusted by any error that has been distributed to the current pixel, is processed as described hereinbelow to determine whether it is best represented by a white (OUTW), gray (OUTW) or black (OUTB) output pixel and is applied to an error detector 45. Typically, the detector 45 includes a summer 40 which calculates the difference, if any, between the adjusted pixel value and a negatively signed 9-bit integer reference value in the range of 0 - 255 that is supplied by a suitable variable reference source. Any difference that exists between those two values is output by the comparator 45 as a signed 9-bit integer error value.

This error value is fed into a diffusion filter 51 for distribution to neighboring unprocessed pixels in accordance with a selected error distribution strategy. Here, for example in compliance with the distribution strategy shown in Fig. 1, the first tap 52 of the filter 51 distributes 5/16ths of the error to the horizontal error buffer for later use in adjusting the value of right-hand neighbor, x_{i+1, j}, of the current pixel. The second filter tap 53 distributes 3/16ths of the error to a summer 54 for later use in adjusting the value of the left-hand diagonal next row neighbor x_{i-1, j+1}. The third tap 54 distributes 7/16ths of the error to a summer 55 for later use in adjusting the value of the directly aligned next row neighbor, x_{i, j+1}, of the current pixel. And, the last tap distributes the remaining 1/16th of the error to a register 56 for later use in adjusting the value of the left-hand diagonal next row neighbor x_{i+1, j+1}. For the boundary conditions at the beginning and end of each line, one approach (often preferable in hardware implementations) is to increase the line size (and the vertical error buffer 43) by a few pixels at each end of the line, and then assume known values for these boundary pixels (typically either white or replicating the first\last pixel value). Another alternative is to re-target the filter taps dynamically at the line boundaries, as to not distribute error beyond the true line limits. For example, in the illustrated the error diffusion filter 51, for the first pixel on a line, the second or 3/16ths tap 53 could be re-targeted to combine with third or 7/16ths tap 54, thereby distributing 10/16ths of the error to the directly aligned next row neighboring pixel.

The illustrated error distribution strategy permits the accumulation of a potentially large vertical error value for every pixel after the first line of an image. In recognition of this, the vertically distributed error values are compressed by a compressor 61 to, say, 4-bit signed integer values before being loaded into vertical error buffer 43. Readers interested in the details of a suitable process for performing this compression may refer to the aforementioned Kletter et al. patent application

Focusing in more detail on the pixel sub-modulation or "partial pixel" capability that is provided by the present invention, it will be seen that provision is made, as indicated by a gray pixel output option (OUTG), for turning the print laser on for less than a full pixel time. In other words, for sub-pixel modulation, the laser is operated near the nominal working point N for the printing process and below the knee of the laser on-time duration/image density response curve of the printer. See Fig. 6.

To take advantage of this pixel sub-modulation capability for printing pixels in highlight regions of images, the counter 36 in the counter circuit 32 is cleared whenever the current pixel value is equal to or less than (i. e., represents at least as dark a gray) as the threshold value EDMING. The counter 32 is incremented each time it receives a pixel value that is less than the threshold value EDMING, so its accumulated count represents the number of consecutive pixel values that have remained below (i. e., represented a lighter gray than) the EDMING threshold as of any given time during the error diffusion process. To prevent false triggering of the sub-pixel modulation, such as by one or very few erroneously low pixel values which may be caused by system noise, another comparator 72 compares the count accumulated by the counter 32 against a threshold count EDNG which is selected to be sufficiently large to confirm that the most recent pixel values represent pixels in a highlight region of the image. The comparator 72 provides a trigger signal which causes a decision logic 73 to enable the sub-pixel modulation mode, thereby making a third option, OUTG (output gray) available for the printing of output pixels if, but only if, those pixels reside within a region of the image that has been confirmed to be a highlight region. As soon as the printing process advances to some other region of the image, the state of the trigger signal for the decision logic 73 is changed by the comparator 72, thereby causing the error diffusion process to revert to its default mode which, as illustrated, gives the process the binary option of outputting white (OUTW) or black (OUTB). This, of course, prevents the printing of gray pixels on the vertical boundaries of image highlight regions, thereby minimizing the risk of unwanted dot-to-dot interaction with any nearby darker regions of the image. As will be appreciated, the thresholds EDMING and EDNG are both tuned in practice to accommodate the specific print engine characteristics and the desired boundary gap considerations.

When the sub-pixel modulation mode is disabled (e. g., when the trigger signal from the comparator 72 is FALSE), the adjusted value for the current pixel is compared against a preselected threshold T₁ by a comparator 74 to provide a signal for instructing the decision logic 73 to cause a white pixel or a black pixel to be output. This, of course, is a print process specific decision. As illustrated, however, if the adjusted pixel value exceeds the threshold T₁, the decision logic 73 selects the white pixel (OUTW) output option and causes the controller 46 to set the reference value for the error detector 45 to a compensating level of 255 (to the extreme "white" end of the range) to compute any attendant error. On the other hand, if the adjusted pixel value is below the threshold T₁, the decision logic 73 selects the black pixel (OUTB) output option and provides no reference level compensation for the error detector 45 which means that the error detector uses a 0 (the black extreme) reference level for computing any error. In practice, of course, the threshold value T₁ may be more or less randomly altered within a confined range of pixel values that represent mid-gray tones.

Now, however, when the sub-pixel modulation mode is enabled in keeping with this invention (or, in other words, when the trigger signal from the comparator 72 is TRUE), the adjusted value for the current pixel is not only compared with the threshold T₁, but is also compared with a second threshold value, T₂, by a another comparator 75. This second threshold value, T₂, represents a lighter gray than the threshold value, T₁. Thus, the decision logic 73 operates as a three-way selector to cause a black pixel (OUTB) to be output if the adjusted value of the current pixel is below the lowermost threshold T₁, a white pixel (OUTW) to be output if the adjusted pixel value is above the uppermost threshold T₂, or a gray pixel (OUTG) to be output if the adjusted pixel value is anywhere between those two thresholds. As before, the decision logic 73 sets the reference level for the error detector 45 to the upper extreme of its range(e.g. 255) when white pixels are being output, while holding it at the lower extreme of that range (e.g., 0) when black pixels are being output. If, however, the adjusted pixel value falls between the two threshold, T₁ and T₂, the decision logic 73 causes a gray pixel (OUTG) to be output and sets the reference level for the error detector 45 to the mid-range value that is stored in a register 78.

The optimized relationship between the partial pixel or gray dot duration (as encoded in OUTG) and the reference level compensating value GCMP that is provided for the error detector 45 is again dependent on the specific print engine characteristics. If, for example, the gray dot is selected to be shorter than a full pixel, the output density will generally be lighter. Theoretically, one would determine just how dark the dot is relative to a full pixel, and from that deduce a compensation value to minimize the remaining error (i. e., the error that is further distributed to the neighboring pixels in the normal error diffusion process). In practice, the exact relationship turns out to not be critical, within limits, because the distributed error tends to cancel across multiple pixels.

Another design consideration regarding the gray dot duration is the stability and repeatability of these dots on the particular engine As discussed above, if the duration is made much smaller than a full pixel, than it becomes unstable and highly dependent upon the operating environment (such as temperature, humidity, etc.), and may even cease to attract enough toner to stick if too small. If, on the other hand, the dot is not made significantly smaller than a pixel, the deviation from a single pixel density is likely to be very small, thereby causing the output image quality to approach that of the binary case. Hence, these two factors need to be taken into account and resolved to best suit the performance characteristics of the intended rendering engine.

As will be appreciated, this invention may be applied to more sophisticated multi-level error diffusion processes. Such a process would require additional threshold comparators for the decision logic 72 and might also require provision for storing additional compensating values for the error detector 45. Conceivably, the threshold values for these additional comparators could be fixed or could vary from one pixel to the next.

## Claims

1. In an error diffuser for rendering images defined by digital pixel samples, the improvement comprising:
a detector for identifying highlight regions of said images; and
decision logic for outputting pixels of relatively short on-time duration for the printing of said hightlight regions, on pixels of longer duration and off pixels for rendering other portions of said image.
